# EUROPÄISCHE PATENTSCHRIFT

(11) **EP 1 207 328 B1**
(45) Veröffentlichungstag und Bekanntmachung des Hinweises auf die Patenterteilung: **12.06.2002**
(21) Anmeldenummer: 00124709.7
(22) Anmeldetag: 11.11.2000
(51) Int. Cl.: F16K 27/10

(54) **Wasserventil**
Water valve
Vanne d'eau

(43) Veröffentlichungstag der Anmeldung: 22.05.2002
(73) Patentinhaber: JCI REGELUNGSTECHNIK GmbH, D-45143 Essen (DE)
(72) Erfinder: Schmitz, Manfred, Johnson Controls, 45143 Essen (DE)
(74) Vertreter: Albrecht, Rainer Harald, Dr.-Ing.

(56) Entgegenhaltungen:
- DE-A- 1 805 875
- DE-U- 8 327 689
- GB-A- 726 121
- GB-A- 896 988
- GB-A- 1 079 690

## Beschreibung

Die Erfindung betrifft ein Wasserventil, insbesondere für Heizungs-, Lüftungs- und Klimaanlagen, mit
einem Ventilgehäuse aus Metallguss, das mindestens eine von einem Gehäusedeckel verschlossene Deckelöffnung aufweist, und
einem Ventilkörper mit einer durch eine Bohrung des Gehäusedeckels geführten Betätigungswelle,
wobei in der Bohrung des Gehäusedeckels eine Wellendichtung angeordnet ist und wobei der die Wellendichtung aufnehmende Ringraum nach außen durch eine die Wellendichtung beaufschlagende Spannhülse verschlossen ist.

Bei der aus der Praxis bekannten Ausführung, von der die Erfindung ausgeht, ist der Gehäusedeckel unter Zwischenschaltung einer Dichtung auf das Ventilgehäuse aufgesetzt und enthält Bohrungen für Befestigungsschrauben. Der Gehäusedeckel weist ebenso wie das Ventilgehäuse eine spanendbearbeitete Ringfläche als Dichtungsfläche auf. Die Bohrung für die Spannhülse ist mit einem Innengewinde versehen. Die Spannhülse weist einen zugeordneten Gewindezapfen auf. Die Fertigung des Wasserventils erfordert im Ergebnis eine große Zahl von spanenden Bearbeitungsvorgängen, die fertigungstechnisch aufwendig sind.

Der Erfindung liegt die Aufgabe zugrunde, das Wasserventil so auszubilden, dass es im Rahmen einer Serienfertigung einfacher und kostengünstig gefertigt werden kann.

Bei einem Wasserventil des eingangs beschriebenen Aufbaus wird die Aufgabe erfindungsgemäß dadurch gelöst, dass das Ventilgehäuse, der Gehausedeckel und die Spannhülse unlösbar miteinander verbunden sind und dass in die Deckelöffnung ein Einsatz aus einem nichtrostenden Stahl eingesetzt ist, der mit dem Ventilgehäuse stoffschlüssig verbunden ist und an dem der Gehäusedeckel unlösbar befestigt ist. Vorzugsweise bestehen die Verbindungen zwischen dem Ventilgehäuse, dem Gehäusedeckel und der Spannhülse aus Schweiß- oder Lötverbindungen, also stoffschlüssigen Verbindungen. Eine Klebeverbindung, z. B. zwischen Gehäusedeckel und Spannhülse, soll nicht ausgeschlossen sein. Die Erfindung beruht auf der Überlegung, dass bei Verwendung hochwertiger Materialien sehr lange Standzeiten erreichbar sind, wenn das Ventil in wasserführenden Leitungen von Heizungs-, Lüftungs- und Klimaanlagen eingesetzt wird, ohne dass Wellendichtungen ausgetauscht oder sonstige Instandsetzungsarbeiten durchgeführt werden müssen. Ausgehend von dieser Überlegung wird das Wasserventil erfindungsgemäß so ausgebildet, so dass spanende Bearbeitungen am Ventilgehäuse auf ein Minimum reduziert sind. Das Ventilgehäuse, der Gehäusedeckel und die Spannhülse bilden ein Armaturenteil, das zerstörungsfrei nicht mehr geöffnet werden kann.

Der aus einem nichtrostenden Stahl bestehende Einsatz ist beispielsweise durch Widerstandsschweißen an dem Ventilgehäuse befestigbar, das aus Sphäroguss, besteht. Die unlösbare Verbindung des Gehäusedeckels am Einsatz erfolgt durch eine Klebe-, Löt- oder Schweißverbindung.

Das erfindungsgemäße Wasserventil hat in der Ausführung als Durchlassventil einen Einlass und einen Auslass. Das erfindungsgemäße Wasserventil kann auch als Mischventil oder Trennventil ausgebildet sein und drei, an Rohrleitungen anschließbare Flansche aufweisen. In weiterer Ausgestaltung lehrt die Erfindung, dass das Ventilgehäuse zwei gegenüberliegende Deckelöffnungen mit jeweils einem aus nichtrostendem Stahl bestehenden Einsatz aufweist, wobei an einem Einsatz der Gehäusedeckel mit Wellendurchführung befestigt ist, wobei an dem anderen Einsatz ein Flansch angeordnet ist und wobei die anschließenden Bauteile unlösbar mit den Einsätzen verbunden sind.

Der Ventilkörper ist als Küken, Ventilkugel oder Klappe ausführbar. Für eine verschleißarme Lagerung sind im Gehäusedeckel und/oder in einem mit dem Gehäusedeckel verbundenen Edelstahleinsatz und/oder in der Spannhülse Lagerschalen für eine Gleitlagerung der Betätigungswelle angeordnet. Die Wellendichtung weist vorzugsweise eine Dichtungspackung aus Dichtungselementen sowie eine die Dichtungspackung axial beaufschlagende Druckfeder auf. Durch die Druckfeder ist eine verschleißabhängige Nachstellung der Dichtung gewährleistet.

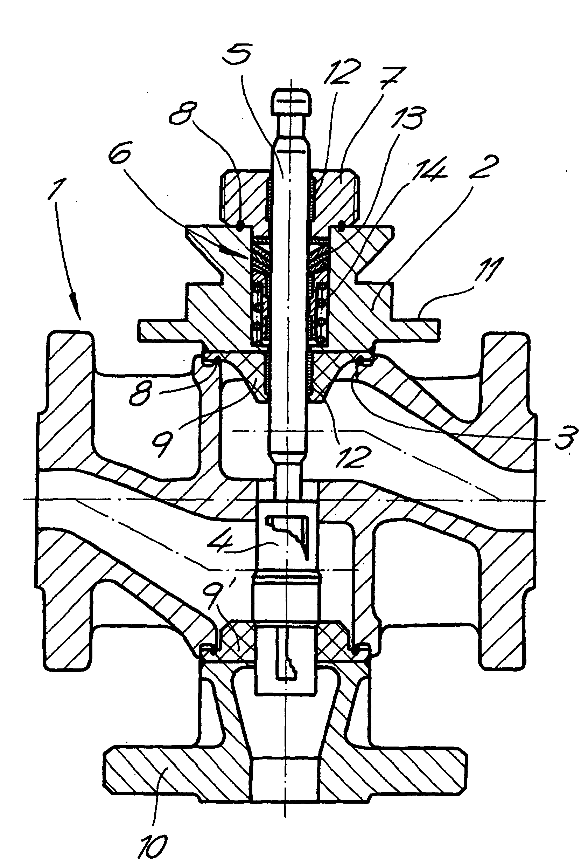

Im Folgenden wird die Erfindung anhand einer lediglich ein Ausführungsbeispiel darstellenden Zeichnung erläutert. Die einzige Figur zeigt in schematischer Darstellung den Längsschnitt durch ein erfindungsgemäßes Wasserventil für Heizungs-, Lüftungs- und Klimaanlagen.

Zum grundsätzlichen Aufbau des Wasserventils gehören ein Ventilgehäuse 1 aus Metallguss, das mindestens eine von einem Gehäusedeckel 2 verschlossene Deckelöffnung 3 aufweist, und ein Ventilkörper 4 mit einer durch eine Bohrung des Gehäusedeckels 2 geführten Betätigungswelle 5. In der Bohrung des Gehäusedeckels 2 ist eine Wellendichtung 6 angeordnet. Der die Wellendichtung 6 aufnehmende Ringraum ist nach außen durch eine die Wellendichtung 6 beaufschlagende Spannhülse 7 verschlossen. Das Ventilgehäuse 1, der Gehäusedeckel 2 und die Spannhülse 7 sind stoffschlüssig durch Schweiß- oder Lötverbindungen 8 unlösbar miteinander verbunden.

Das Ventilgehäuse 1 des Wasserventils besteht im Ausführungsbeispiel aus Sphäroguss und weist Anschlussflansche zum Anschluss an Rohrleitungen auf. Das Wasserventil ist in Rohrleitungen mit einer Nennweite zwischen 6 bis 25 bar und 150 mm einsetzbar und für einen Nenndruck von 16 bar ausgelegt. Das im Ausführungsbeispiel dargestellte Wasserventil ist als Misch- oder Trennventil einsetzbar und hat drei Rohranschlüsse in Form von Anschlussflanschen. Das Ventilgehäuse 1 weist im Ausführungsbeispiel zwei gegenüberliegende Deckelöffnungen auf, in die jeweils Edelstahleinsätze 9, 9', also Einsätze aus einem nichtrostenden Stahl, eingesetzt sind. Die Einsätze 9, 9' sind stoffschlüssig, z. B. durch Widerstandsschweißen, mit dem Ventilgehäuse 1 verbunden. An einem Einsatz 9 ist der Gehäusedeckel 2 mit der Wellendurchführung für die Betätigungswelle 5 befestigt; an dem anderen Einsatz ist ein Flansch 10 aus Grauguss, z. B. Sphäroguss, angeordnet. Die anschließenden Bauteile 2, 10' sind durch Schweiß- oder Lötverbindungen unlösbar mit den Einsätzen 9, 9' verbunden.

Der die Wellendurchführung für die Betätigungswelle 5 enthaltende Gehäusedeckel 2 weist Anschlussflächen 11 zum Anschluss eines Stellantriebes auf. Im Ausführungsbeispiel sind in der Spannhülse 7 sowie im Edelstahleinsatz 9 Lagerschalen 12 für eine Gleitlagerung der Betätigungswelle 5 angeordnet. Die Wellendichtung 6 weist eine Dichtungspackung aus Dichtungselementen 13 sowie eine die Dichtungspackung axial beaufschlagende Druckfeder 14 auf.

## Patentansprüche

1. Wasserventil, insbesondere für Heizungs-, Lüftungs- und Klimaanlagen, mit
einem Ventilgehäuse (1) aus Sphäroguss, das mindestens eine von einem Gehäusedeckel (2) verschlossene Deckelöffnung (3) aufweist, und
einem Ventilkörper (4) mit einer durch eine Bohrung des Gehäusedeckels (2) geführten Betätigungswelle (5),
wobei in der Bohrung des Gehäusedeckels (2) eine Wellendichtung (6) angeordnet ist und wobei der die Wellendichtung (6) aufnehmende Ringraum nach außen durch eine die Wellendichtung (6) beaufschlagende Spannhülse (7) verschlossen ist, **dadurch gekennzeichnet, dass** das Ventilgehäuse (1), der Gehäusedeckel (2) und die Spannhülse (7) unlösbar miteinander verbunden sind und dass in die Deckelöffnung ein Einsatz (9) aus einem nichtrostenden Stahl eingesetzt ist, der mit dem Ventilgehäuse (1) stoffschlüssig verbunden ist und an dem der Gehäusedeckel (2) unlösbar befestigt ist.

2. Wasserventil nach Anspruch 1, **dadurch gekennzeichnet, dass** die Verbindungen zwischen dem Ventilgehäuse (1), dem Gehäusedeckel (2) und der Spannhülse (7) aus Schweiß- oder Lötverbindungen (8) bestehen.

3. Wasserventil nach Anspruch 1 oder 2, **dadurch gekennzeichnet, dass** das Ventilgehäuse (1) zwei gegenüberliegende Deckelöffnungen mit jeweils einem aus nicht rostendem Stahl bestehenden Einsatz (9, 9') aufweist, wobei an dem einen Einsatz (9) der Gehäusedeckel (2) mit der Wellendurchführung für die Betätigungswelle befestigt ist, wobei an dem anderen Einsatz (9') ein Flansch (10) angeordnet ist und wobei die anschließenden Bauteile (2, 10) unlösbar mit den Einsätzen (9, 9') verbunden sind.

4. Wasserventil nach einem der Ansprüche 1 bis 3, **dadurch gekennzeichnet, dass** im Gehäusedeckel (2) und/oder in dem mit dem Gehäusedeckel (2) verbundenen Einsatz (9) und/oder der Spannhülse (7) Lagerschalen (12) für eine Gleitlagerung der Betätigungswelle (5) angeordnet sind.

5. Wasserventil nach einem der Ansprüche 1 bis 4, **dadurch gekennzeichnet, dass** die Wellendichtung (6) eine Dichtungspackung aus Dichtungselementen (13) sowie eine die Dichtungspackung axial beaufschlagende Druckfeder (14) aufweist.

## Claims

1. A water valve, particularly for heating, ventilation and air conditioning installations, comprising
a valve housing (1) made of spheroidal cast iron which comprises at least one cover opening (3) which is closed by a housing cover (2), and
a valve body (4) comprising an operating spindle (5) which is passed through a bore in the housing cover (2),
wherein a spindle seal (6) is disposed in the bore in the housing cover (2), and wherein the annular space which receives the spindle seal (6) is outwardly closed by a clamping bushing (7) which acts on the spindle seal (6), **characterised in that** the valve housing (1), the housing cover (2) and the clamping bushing (7) are non-detachably joined to each other, and that an insert (9) made of a rustproof steel is inserted in the cover opening, which insert is joined to the valve housing (1) by the formation of a material bond and to which the housing cover (2) is non-detachably fixed.

2. A water valve according to claim 1, **characterised in that** the joints between the valve housing (1), the housing cover (2) and the clamping bushing (7) consist of welded or soldered joints (8).

3. A water valve according to claims 1 or 2, **characterised in that** the valve housing (1) comprises two opposite cover openings, each of which has an insert (9, 9') consisting of a rustproof steel, wherein the housing cover (2), with the spindle lead-through for the operating spindle, is fixed to one insert (9), wherein a flange (10) is disposed on the other insert (9'), and wherein the adjoining components (2, 10) are non-detachably joined to the inserts (9, 9').

4. A water valve according to any one of claims 1 to 3, **characterised in that** bearing shells (12) for a plain bearing for the operating spindle (5) are disposed in the housing cover (2) and/or in the insert (9) which is joined to the housing cover (2) and/or in the clamping bushing (7).

5. A water valve according to any one of claims 1 to 4, **characterised in that** the spindle seal (6) comprises a seal packing made of sealing elements (13) and also comprises a pressure spring (14) which acts axially on the seal packing.

## Revendications

1. Vanne d'eau, en particulier pour installations de chauffage, de ventilation et de climatisation, comportant
un boîtier de vanne (1) en fonte nodulaire qui comporte au moins une ouverture de couvercle (3) fermée par un couvercle de boîtier (2) et
un corps de vanne (4) avec un arbre d'actionnement (5) guidé à travers un trou du couvercle de boîtier (2),
une garniture d'étanchéité d'arbre (6) étant disposée dans le trou du couvercle de boîtier (2) et l'espace annulaire, recevant la garniture d'étanchéité d'arbre (6), étant fermé vers l'extérieur par une douille de serrage (7) agissant sur la garniture d'étanchéité d'arbre (6), **caractérisée en ce que** le boîtier de vanne (1), le couvercle de boîtier (2) et la douille de serrage (7) sont reliés entre eux de manière inséparable et **en ce que** dans l'ouverture de couvercle est inséré un insert (9) en acier inoxydable, qui est relié au boîtier de vanne (1) par liaison de matière et qui est fixé, de manière inséparable, au couvercle de boîtier (2).

2. Vanne d'eau selon la revendication 1, **caractérisée en ce que** les liaisons entre le boîtier de vanne (1), le couvercle de boîtier (2) et la douille de serrage (7) sont constituées de liaisons soudées ou brasées (8).

3. Vanne d'eau selon la revendication 1 ou 2, **caractérisée en ce que** le boîtier de vanne (1) présente deux ouvertures de couvercle opposées avec chacune un insert (9, 9') en acier inoxydable, le couvercle de boîtier (2) avec la traversée d'arbre pour l'arbre d'actionnement étant fixé à l'un des inserts (9), une bride (10) étant disposée sur l'autre insert (9') et les composants (2, 10) adjacents étant reliés aux inserts (9, 9') de manière inséparable.

4. Vanne d'eau selon l'une des revendications 1 à 3, **caractérisée en ce que** dans le couvercle de boîtier (2) et/ou dans l'insert (9), relié au couvercle de boîtier (2), et/ou dans la douille de serrage (7) sont disposées des coquilles de coussinet (12) pour supporter à glissement l'arbre d'actionnement (5).

5. Vanne d'eau selon l'une des revendications 1 à 4, **caractérisée en ce que** la garniture d'étanchéité d'arbre (6) comporte une garniture d'étanchéité faite d'éléments d'étanchéité (13) ainsi qu'un ressort de compression (14) qui agit axialement sur la garniture d'étanchéité.
